(19) Europäisches Patentamt
European Patent Office
Office européen des brevets

(11) **EP 4 088 108 B1**

(12) **EUROPÄISCHE PATENTSCHRIFT**

(45) Veröffentlichungstag und Bekanntmachung des Hinweises auf die Patenterteilung:
**05.03.2025 Patentblatt 2025/10**

(21) Anmeldenummer: **21700115.5**

(22) Anmeldetag: **06.01.2021**

(51) Internationale Patentklassifikation (IPC):
**G01N 29/04** *(2006.01)* **G01N 29/07** *(2006.01)*
**G01N 29/11** *(2006.01)* **G01N 29/34** *(2006.01)*
**G01N 29/44** *(2006.01)* **G01N 29/46** *(2006.01)*

(52) Gemeinsame Patentklassifikation (CPC):
**G01N 29/043; G01N 29/07; G01N 29/11;**
**G01N 29/348; G01N 29/4454; G01N 29/46;**
G01N 2291/044; G01N 2291/101; G01N 2291/102;
G01N 2291/106; G01N 2291/2634

(86) Internationale Anmeldenummer:
**PCT/EP2021/050130**

(87) Internationale Veröffentlichungsnummer:
**WO 2021/140120 (15.07.2021 Gazette 2021/28)**

(54) **WANDDICKENBESTIMMUNG EINER MATERIALSCHICHT MITTELS ULTRASCHALL**

WALL THICKNESS DETECTION OF A MATERIAL LAYER USING ULTRASOUND

DÉTECTION D'ÉPAISSEUR DE PAROI D'UNE COUCHE DE MATÉRIAU À L'AIDE D'ULTRASONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.01.2020 BE 202005004**

(43) Veröffentlichungstag der Anmeldung:
**16.11.2022 Patentblatt 2022/46**

(73) Patentinhaber: **Rosen IP AG**
**6370 Stans (CH)**

(72) Erfinder: **BOUAOUA, Nourreddine**
**76189 Karlsruhe (DE)**

(74) Vertreter: **Michalski Hüttermann & Partner**
**Patentanwälte mbB**
**Kaistraße 16A**
**40221 Düsseldorf (DE)**

(56) Entgegenhaltungen:
**EP-A2- 1 333 277      EP-A2- 2 857 834**
**WO-A1-92/10746       WO-A1-98/52033**

## Beschreibung

Technisches Gebiet

Die Erfindung betrifft ein Verfahren zur Bestimmung einer Wanddicke einer Materialschicht.

Des Weiteren betrifft die vorliegende Erfindung ein Computerprogramm, umfassend Befehle, die bei der Ausführung des Computerprogramms durch einen Computer diesen veranlassen, Schritte des Verfahrens auszuführen.

Des Weiteren betrifft die vorliegende Erfindung ein computerlesbares Medium, umfassend Befehle, die bei der Ausführung durch einen Computer diesen veranlassen, Schritte des Verfahrens auszuführen.

Hintergrund der Erfindung

Bislang bekannt sind Verfahren, bei denen die Wanddickenbestimmung mittels hochfrequenten Ultraschall in einem Bereich von 4 bis 5 MHz erfolgt. Bei Messungen mit hochfrequentem Ultraschall beeinflussen kleinste Abweichungen von einer Flächennormalen eines auf eine Wandfläche einfallenden Ultraschallstrahls bereits Messergebnisse einer Wanddicke. EP 2 857 834 A2 betrifft eine Ultraschall-Rohrmessvorrichtung umfassend eine Vielzahl von Ultraschall-Sendeempfängern, die diskret an einer Rohrwand eines Rohrs angeordnet sind; und eine Steuereinheit, die so konfiguriert ist, dass sie die Vielzahl von Ultraschall-Sendeempfängern steuert und einen Erzeugungspunkt einer in dem Rohr verursachten Beschädigung auf der Grundlage eines zwischen den Ultraschall-Sendeempfängern ausgetauschten Ultraschallsignals erfasst. WO 92/10746 A1 betrifft ein Verfahren zur Messung der Laufzeit von Ultraschall beim Impulsreflexionsverfahren. Es wird mindestens ein Anregungsimpuls, möglichst in Form einer Stoßwelle, von einer Sonde ausgesendet und eine Vorlaufstrecke bis zu einem zu untersuchenden Objekt zurückgelegt mit einer Vorder- und einer Rückwand, wobei an der Vorder- und der Rückwand mindestens ein Reflexionsimpuls erzeugt wird. Um ein derartiges Verfahren dahingehend zu verbessern, dass Laufzeiten zuverlässig gemessen werden können, um die Dicke oder Auffälligkeiten eines Objekts auch bei rauen Oberflächen, fehlenden und verfälschten Impulsreflexionen zu erkennen, wird ein Zeitfenster benötigt zum Empfangen der auf den Anregungspuls folgenden Reflexionspulse bestimmt wird, innerhalb dessen alle aufeinanderfolgenden Reflexionspulse digitalisiert werden, dann die innerhalb des Zeitfensters liegenden Reflexionspulse digital gefiltert und parametrisiert werden, die gefilterten und parametrierten Reflexionspulse an eine Recheneinheit übermittelt werden und mittels eines vorgegebenen Algorithmus anhand variabler Kriterien ausgewertet.

Beschreibung der Erfindung

Ausgehend von dieser Situation ist es eine Aufgabe der vorliegenden Erfindung, ein verbessertes Verfahren zur Wanddickenbestimmung der Materialschicht, ein verbessertes Computerprogramm, und ein verbessertes computerlesbares Medium anzugeben.

Insbesondere soll die Bestimmung der Wanddicke vereinfacht werden, und eine Bestimmung von Wanddicken für verschiedene Materialschichten einer Rohrleitungswand sollen möglich sein, wobei gleichzeitig die Sensitivität zumindest gleich bleiben soll wie bei einer Bestimmung der Wanddicke mittels hochfrequentem Ultraschall.

Die Aufgabe der Erfindung wird durch die Merkmale der unabhängigen Hauptansprüche gelöst. Vorteilhafte Ausgestaltungen sind in den Unteransprüchen angegeben. Sofern technisch möglich, können die Lehren der Unteransprüche beliebig mit den Lehren der Haupt- und Unteransprüche kombiniert werden.

Erfindungsgemäß ist weiter ein Verfahren zum Bestimmen einer Wanddicke einer Materialschicht einer Rohrleitungswand angegeben. Das Verfahren weist folgende Schritte auf: Operieren zumindest einer Transmittereinheit, um Ultraschall in Richtung einer Materialschicht zu emittieren und ein von der Materialschicht reflektiertes Ultraschallecho zu detektieren. Die zumindest eine Transmittereinheit wird hierbei operiert, um Ultraschall mit einer Wellenlänge Lambda ($\lambda$) zu emittieren, die folgender Bedingung genügt:

$$\lambda \gg |Dl - Dk|.$$

Hierbei ist *Dl* ein Akustikpfad eines Ultraschallstrahls, der aus einem der Rohrleitungswand fernliegenden Abschnitt der Strahlenaustrittsfläche der Transmittereinheit austritt, und *Dk* ist ein Akustikpfad eines Ultraschallstrahls, der aus einem der Rohrleitungswand nächstliegenden Abschnitt der Strahlenaustrittsfläche der Transmittereinheit austritt. Weiter weist das Verfahren ein Operieren einer mit der zumindest einen Transmittereinheit signaltechnisch verbundenen Steuereinheit auf. Die Steuereinheit wird operiert, um eine Wanddicke der Materialschicht anhand des Ultraschallechos zu bestimmen. Das Verfahren weist bevorzugt Schritte entsprechend Merkmalen des Sensorsystems gemäß einer der nachfolgend beschriebenen vorteilhaften Ausführungsformen auf.

Insbesondere entspricht *Dl* einem Akustikpfad eines Ultraschallstrahls, der aus einem der Rohrleitungswand fernliegenden Abschnitt der Strahlenaustrittsfläche der Transmittereinheit austritt und der schräg zu einer Flächennormalen einer nächstliegenden Oberfläche der Materialschicht einfällt. Alternativ oder zusätzlich entspricht *Dk* einem Akustikpfad eines Ultraschallstrahls, der aus einem der Rohrleitungswand nächstliegenden Abschnitt der Strahlenaustrittsfläche der Transmittereinheit austritt und der schräg zu der Flächennormalen der nächstliegenden Oberfläche der Materialschicht einfällt.

Es ist bevorzugt, dass die Reihenfolge von Verfahrensschritten, soweit nicht technisch in einer expliziten Reihenfolge erforderlich, variiert werden kann. Besonders bevorzugt ist jedoch die vorgenannte Reihenfolge der Verfahrensschritte.

Erfindungsgemäß ist weiter ein Computerprogramm angegeben, umfassend Befehle, die bei der Ausführung des Computerprogramms durch einen Computer diesen veranlassen, ein zuvor beschriebenes Verfahren auszuführen. Ein Computerprogramm ist eine Sammlung von Anweisungen zum Ausführen einer bestimmten Aufgabe, die dafür konzipiert ist, eine bestimmte Klasse von Problemen zu lösen. Die Anweisungen eines Programms sind dafür konzipiert, durch einen Computer ausgeführt zu werden, wobei es erforderlich ist, dass ein Computer Programme ausführen kann, damit es funktioniert.

Erfindungsgemäß ist weiter ein computerlesbares Medium angegeben, umfassend Befehle, die bei der Ausführung durch einen Computer diesen veranlassen, ein zuvor beschriebenes Verfahren auszuführen.

Nachfolgend werden die Grundidee der Erfindung und einzelne Aspekte des beanspruchten Erfindungsgegenstandes erläutert und weiter nachfolgend bevorzugte modifizierte Ausführungsformen der Erfindung beschrieben. Erläuterungen, insbesondere zu Vorteilen und Definitionen von Merkmalen, sind dem Grunde nach beschreibende und bevorzugte, jedoch nicht limitierende Beispiele. Sofern eine Erläuterung limitierend ist, wird dies ausdrücklich erwähnt.

Grundidee der vorliegenden Erfindung ist es, zumindest eine Transmittereinheit zum Bestimmen einer Wanddicke einer Materialschicht einer Rohrleitungswand zu verwenden. Die Rohrleitungswand ist zumindest aus einer Materialschicht gebildet. Die Frequenz des Ultraschalls wird dabei so gewählt, dass Ausrichtungsungenauigkeiten der Transmittereinheit bezüglich der Oberfläche der Rohrleitungswand weniger stark bei der Signaldetektion ins Gewicht fallen. Als besonders vorteilhaft hat sich eine Festlegung der Wellenlänge anhand der von der Flächennormalen abweichenden akustischen Pfade von Ultraschallstrahlen herausgestellt. Die Flächennormale entspricht einer senkrecht von der Oberfläche der Materialschicht abstehenden, gedachten Gerade, wobei die Gerade von dem Punkt der Oberfläche der Materialschicht absteht, an dem ein Ultraschallstrahl auf die Oberfläche auftrifft. Das erfindungsgemäße Verfahren ermöglicht insbesondere eine zuverlässige Bestimmung der Wanddicke bei Ausrichtungstoleranzen bis zu fünf Grad bezüglich der Flächennormalen an dem Punkt, auf den ein Ultraschallstrahl mit dem Bereich größter Intensität eines Strahlgürtels des Ultraschallstrahls gerichtet ist. Zum Bestimmen einer Wanddicke regt die Transmittereinheit die zu untersuchende Materialschicht der Rohrleitung mit ihrer Resonanzfrequenz an, indem die Transmittereinheit Ultraschall in Richtung der Materialschicht emittiert. Die in ihrer Resonanzfrequenz schwingende Materialschicht gibt an die Transmittereinheit Ultraschallechos ab, welche die Transmittereinheit wiederum detektiert. Eine Steuereinheit erhält von der Transmittereinheit einen zeitlichen Verlauf eines Signals des Ultraschallechos. Die Steuereinheit wertet das Ultraschallecho-Signal aus und bestimmt anhand dieses die Wanddicke der Materialschicht.

Bei der Bestimmung der Wanddicke der Materialschicht wird berücksichtigt, dass das Ultraschallecho-Signal sich entsprechend einem Oberflächenprofil der Materialschicht ändert. Hierbei kann es sich um eine der Transmittereinheit nächstliegende Oberfläche, z. B. in einer Innenschicht der Rohrleitung handeln, oder um eine Oberfläche handeln, welche auf der Außenoberfläche der Rohrleitungswand liegt, d.h. eine eine Außenschicht der Rohrleitung bildende Oberfläche ist.

Gemäß einer modifizierten Ausführungsform der Erfindung ist vorgesehen, dass die Rohrleitungswand zumindest zwei Materialschichten aufweist, wobei die zumindest eine Transmittereinheit konfiguriert ist, beim Emittieren von Ultraschall jede der Materialschichten separat mit ihrer jeweiligen Resonanzfrequenz anzuregen. Somit können mit Vorteil auch mehrschichtige Rohrleitungen inspiziert werden. Auch ist eine Bestimmung der Wanddicke bei verdreckten Rohrleitungen möglich, welche z. B. an ihrer Innenwand Schmutz-Ablagerungen haben. Insbesondere ist zumindest eine der Materialschichten nicht-metallisch, insbesondere aus Kunststoff oder aus Zement.

Gemäß einer modifizierten Ausführungsform der Erfindung ist vorgesehen, dass zumindest eine Transmittereinheit zum Aussenden und Detektieren von niederfrequentem Ultraschall ausgebildet ist, wobei eine Frequenz des Ultraschalls in einem Bereich von 100 KHz bis 1200 KHz liegt. Niederfrequent betriebene Transmittereinheiten erlauben mit Vorteil eine Robustheit der Messungen bei ungenauer Ausrichtung zu einer Flächennormalen der Materialschicht-Oberfläche. Die Transmittereinheit ist beispielsweise ein Breitband-Transmitter mit einem Ultraschallstrahl-Spektrum, welches zu 80 % bei einer zentralen, emittierten Ultraschallfrequenz von 600 KHz genutzt werden kann. Mit Vorteil können mit einer Transmittereinheit der modifizierten Ausführungsform Materialschichten von Rohrleitungswänden mit einer Wanddicke in einem Bereich von 3 mm bis 30 mm auf ihre Wanddicke inspiziert werden. Die Messungen sind mit Vorteil besonders robust gegenüber Ausrichtungsungenauigkeiten des Sensorsystems zur Rohrleitungswand.

Gemäß einer modifizierten Ausführungsform der Erfindung ist vorgesehen, dass die Steuereinheit konfiguriert ist, folgendes Verfahren zur Auswertung eines Signals eines Ultraschallechos auszuführen: Auswählen eines zeitlichen Signalausschnitts nach einem Innenwandecho der Materialschicht und einer Harmonischen ersten Grades des Innenwandechos der Materialschicht, Anwenden einer zweifachen Fourier-Transformation auf den Signalausschnitt; und anschließend Berechnen der Wanddicke anhand eines zeitlich am frühesten auftretenden Maximums einer Signalamplitude des Signalausschnitts. Ein Innenwandecho ist ein Echo, welches von einer dem Transmitter zugewandten Rohrleitungsoberfläche einer Materialschicht in Richtung des Transmitters reflektiert wird. Hierbei sei klargestellt, dass die das Innenwandecho abgebende Materialschicht nicht nur die der Transmittereinheit nächstliegende, d. h. die Innenwand der Rohrleitung bildende, Materialschicht sein muss. Gegenüber dem Innenwandecho wäre ein Außenwandecho ein Echo, welches von einer dem Transmitter abgewandten, die Außenfläche (des Außenmantels) der Rohrleitung bildenden Rohrleitungsseite in Richtung des Transmitters reflektiert wird. Mit dem vorteilhaften Verfahren kann ein Signal-Rausch-Verhältnis erheblich verbessert werden.

Gemäß einer modifizierten Ausführungsform der Erfindung ist an dem Sensorsystem eine einzige Transmittereinheit vorgesehen, die konfiguriert ist, reflektierten Ultraschall zu detektieren, und mehrere, um die einzige Transmittereinheit angeordnete, Transmittereinheiten, die jeweils konfiguriert sind, Ultraschall zu senden. Die Anordnung der Transmittereinheiten zueinander ist in Bezug auf eine Ultraschalleintritts- bzw. Ultraschallaustrittsfläche definiert. Die Anordnung der Transmittereinheiten ist dabei so, dass die Ultraschallaustritts- bzw. eintrittsflächen aller Transmittereinheiten in einer gemeinsamen Ebene liegen. Es hat sich überraschenderweise herausgestellt, dass bei Verwendung einer einzigen, insbesondere mittig, angeordneten Transmittereinheit zum Detektieren der Ultraschallechos eine besonders gute Sensitivität für kleinere Risse erreicht werden kann. Bei einer mittigen Anordnung der einzigen Transmittereinheit ist die Sensitivität dabei besonders gut. Die umlegenden Transmittereinheiten, welche Ultraschall emittieren, emittieren somit besonders viel Energie, welche durch das Gas in einer Rohrleitung propagieren und die Rohrleitungswand durchdringen kann, so dass auch besonders gute Messignale erreicht werden können. Weiterhin können die Effekte von Fehlausrichtungen des Sensorsystems mit Vorteil ausgeglichen werden.

Gemäß einer modifizierten Ausführungsform der Erfindung weist das Sensorsystem genau zwei Transmittereinheiten auf, von denen die erste Transmittereinheit konfiguriert ist, reflektierten Ultraschall zu detektieren, und die zweite Transmittereinheit konfiguriert ist, Ultraschall zu senden. Dies ist eine besonders kompakte Ausführungsform des Sensorsystems.

Gemäß einer besonders vorteilhaften Ausführungsform der Erfindung ist vorgesehen, dass die zweite Transmittereinheit durch einen an ihrer Ultraschallaustrittsfläche einstückigen Ring gebildet ist und, vorzugsweise konzentrisch, innerhalb des Rings eine Ultraschalleintrittsfläche der ersten Transmittereinheit angeordnet ist. Eine einstückige Ausbildung des Rings meint vor allem eine geschlossene einstückige Ultraschallaustrittsfläche der zweiten Transmittereinheit. Hierbei hat sich herausgestellt, dass die für die vorherige Ausführungsform beschriebenen Effekte noch deutlicher bei dieser besonders vorteilhaften Ausführungsform auftreten. Gemäß einer weiter besonders bevorzugten Ausführungsform ist die zweite Transmittereinheit konzentrisch derart zu der ersten Transmittereinheit angeordnet, dass die erste und die zweite Transmittereinheit einen gemeinsamen Kreismittelpunkt aufweisen. Die erste Transmittereinheit ist insbesondere kreisförmig ausgestaltet. Bei vorbeschriebenen Ausführungsformen ist es insbesondere möglich, ein gutes Signal-Rausch-Verhältnis bei einer Abweichung der Ausrichtung eines niederfrequenten Ultraschallstrahls zu der Rohrwand von 2 Grad zu einer Flächennormalen einer Rohrwand bei einer Wanddicke von über 30 mm zu erhalten. Bei dünneren Wanddicken sind noch größere Abweichungen bei der Ausrichtung möglich, bei immer noch ausreichendem Signal-Rausch-Verhältnis.

Bei den vorgenannten Transmittereinheit-Ausgestaltungen ist kein komplexer Aufbau für ein Inline-Inspektionsgerät (ILI) notwendig. Im Falle eines Einbaus des Sensorsystems in einem Inline-Inspektionsgerät reicht demnach die einziges Sensorsystem je Kreissektor einer Querschnittsfläche der Rohrleitung aus, um die Wanddicke zu bestimmen. Je nach Anzahl der Kreissektoren, in welche die Querschnittsfläche des ILI geteilt ist, wird eine entsprechende Anzahl von Sensorsystemen gewählt. Je Kreissektor ist aber nur ein einziges Sensorsystem erforderlich, von der separat zu den anderen Sensorsystemen Fehlstellen erkannt werden. Bevorzugt ist das ILI mit jeweils zwei mal vier Sensorsystemen je Kreissektor ausgestaltet, wobei die zwei Sensorsysteme, d. h. eine Reihenanordnung mit zwei Sensorsystemen, auf einer virtuellen Umfangslinie am Außenumfang des ILI angeordnet sind, und die vier Sensorsysteme, d. h. eine Reihenanordnung mit vier Sensorsystemen, sich längs einer virtuellen Linie längs einer Längsachse der Rohrleitungswand erstreckend angeordnet sind.

Gemäß einer modifizierten Ausführungsform der Erfindung weist das Sensorsystem eine Vielzahl von Transmittereinheiten auf, wobei Ultraschallaustritts-und -eintrittsflächen der Transmittereinheiten kreisförmig angeordnet sind. Eine kreisförmige Anordnung meint beispielsweise, dass die Transmittereinheiten mit ihrem jeweiligen Mittelpunkt der Ultraschallaustritts-bzw. eintrittsflächen auf einem Fiktionskreis angeordnet sind. Hierbei kann eine Transmittereinheit, welche lediglich zum Detektieren ausgestaltet ist, in einer Kreismitte angeordnet sein. Bei einer kreisförmigen Anordnung Austritts-/Eintrittsflächen für Ultraschall können mit Vorteil besonders bei gasgefüllten Rohrleitungen gute Signal-Rausch-Verhältnisse erreicht werden.

Gemäß einer besonders modifizierten Ausführungsform der Erfindung ist vorgesehen, dass die zumindest eine Transmittereinheit konfiguriert ist, über einen Hochspannungschirp angeregt zu werden. Die Hochspannung zur Anregung zumindest einer Transmittereinheit weist eine Frequenz von 200 KHz bis 1200 KHz auf. Hochspannung entspricht einer Spannung in einem Bereich von 10 Volt bis 300 Volt. Hierbei hat sich mit Vorteil herausgestellt, dass besonders gute Signal-Rausch-Verhältnisse erreicht werden können.

Kurze Beschreibung der Zeichnungen

Nachfolgend wird die Erfindung unter Bezugnahme auf die anliegenden Zeichnungen anhand bevorzugter Ausführungsbeispiele näher erläutert. Die Formulierung Figur ist in den Zeichnungen mit Fig. abgekürzt.
In den Zeichnungen zeigen

Figur 1a     eine schematische Ansicht einer ersten Messanordnung mit einem Sensorsystem und einer Rohrleitung mit einer metallischen Außenwand und einer nicht-metallischen Innenwand;

Figur 1b     eine schematische Ansicht einer zweiten Messanordnung mit einem Sensorsystem und einer Rohrleitung mit einer nicht-metallischen Außenwand und einer metallischen Innenwand;

Figur 1c     ein Flussdiagramm eines Verfahrens nach einem Ausführungsbeispiel;

Figur 2a     eine schematische Draufsicht auf eine Ultraschalleintritts-/Austrittsfläche eines Sensorsystems gemäß einer möglichen Ausführungsform;

Figur 2b     eine schematische Draufsicht auf eine Ultraschalleintritts-/Austrittsfläche; eines Sensorsystems gemäß einer weiteren möglichen Ausführungsform; und

Figur 2c     eine schematische Draufsicht auf eine Ultraschalleintritts-/Austrittsfläche eines Sensorsystems gemäß einer weiteren möglichen Ausführungsform.

Detaillierte Beschreibung der Ausführungsbespiele

Die beschriebenen Ausführungsbeispiele sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wird, kann eigenständig oder in Kombination mit anderen Merkmalen in einem beliebigen anderen Ausführungsbeispiel genutzt werden. Jedes Merkmal, das für ein Ausführungsbeispiel einer bestimmten Anspruchskategorie beschrieben wird, kann auch in entsprechender Weise in einem Ausführungsbeispiel einer anderen Anspruchskategorie eingesetzt werden.

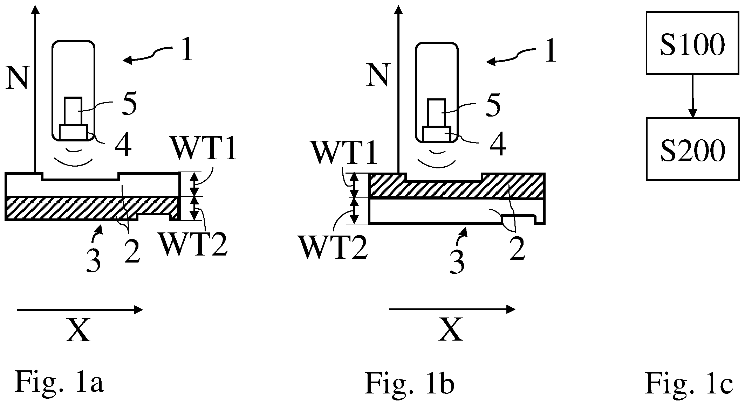

Die Figur 1a zeigt eine schematische Ansicht eines Sensorsystems 1 gemäß einer ersten Ausführungsform. Das Sensorsystem 1 eignet sich zum Bestimmen einer Wanddicke WT1, WT2 einer Materialschicht 2 einer Rohrleitungswand 3. Die Rohrleitungswand 3 weist im vorliegenden Ausführungsbeispiel zwei Materialschichten 2 auf, von denen eine erste, dem Sensorsystem 1 nächstliegende Materialschicht 2 aus einem nicht-metallischen Material gebildet ist und eine, dem Sensorsystem 1 fernliegende Materialschicht 2 (gestrichelt ausgefüllt) aus einem metallischen Material gebildet ist, wie zum Beispiel Stahl.
Die nicht-metallische Materialschicht 2 kann aus Ablagerungen in der, aus der metallischen Materialschicht 2 bestehenden, Rohrleitungswand 3 gebildet sein. Alternativ ist die nicht-metallische Materialschicht 2 aus einer Innenlackierung oder Innenverkleidung gebildet, wie z. B. aus Wachs. Alternativ ist die nicht-metallische Materialschicht 2 aus Polyurethan oder einem anderen Kunststoff gebildet.
Die Materialschichten 2 weisen längs einer Längsachse X der Rohrleitungswand 3 variierende Wanddicken WT1, WT2 auf. Die Wanddicken WT1, WT2 liegen in einem Bereich von 6 mm bis 30 mm. Auch Wanddicken größer als 30 mm sind denkbar.
Das Sensorsystem 1 weist eine Transmittereinheit 4 und eine Steuereinheit 5 auf. Die Transmittereinheit 4 und die Steuereinheit 5 sind in einer gemeinsamen Baueinheit des Sensorsystems 1 integriert. Die Transmittereinheit 4 ist konfiguriert, Ultraschall zu emittieren und Ultraschall zu empfangen, welcher in Form von Ultraschallechos von der jeweiligen Materialschicht 2 der Rohrleitungswand 3 erzeugt wird. Für die Bestimmung der Wanddicke WT1, WT2 der jeweiligen Materialschicht 2 regt die Transmittereinheit 4 die jeweilige Materialschicht 2 mit ihrer Resonanzfrequenz an und detektiert die an der angeregten Materialschicht 2 erzeugten Ultraschallechos.
Die Transmittereinheit 4 ist zum Aussenden und Detektieren von niederfrequentem Ultraschall ausgebildet. Hierbei emittiert die Transmittereinheit 4 niederfrequenten Ultraschall mit einer Frequenz in einem Bereich von 500 bis 600 KHz. Zum Emittieren von Ultraschall wird die Transmittereinheit 4 mit einem Hochspannungchirp in einem Bereich von 200 KHz bis 1000 KHz angeregt.
Die Transmittereinheit 4 wird unter verschiedenen Verhältnissen betrieben, welche in der Rohrleitung vorherrschen. Beispielsweise kann Gas mit einem Druck von mindestens von $5 \times 10^6$ Pa in der Rohrleitung vorliegen. Alternativ kann die Rohrleitung flüssigkeitsführend sein, z. B. für Öl oder Wasser.
Die Figur 1b zeigt eine schematische Ansicht eines Sensorsystems 1 gemäß der ersten Ausführungsform, wobei das Sensorsystem 1 eine Rohrleitungswand 3 anderen Aufbaus als die Rohrleitungswand 3 der Fig. 1a untersucht. Die Rohrleitungswand 3 weist im vorliegenden Ausführungsbeispiel zwei Materialschichten 2 auf, von denen eine erste, dem Sensorsystem 1 nächstliegende Materialschicht 2 (gestrichelt ausgefüllt) aus einem metallischen Material gebildet ist und eine, dem Sensorsystem 1 fernliegende Materialschicht 2 aus einem nicht-metallischen Material gebildet ist. Das Sensorsystem 1 ist in gleicher Weise ausgestaltet wie gemäß der Ausführungsform nach Fig. 1a.

Die nicht-metallische Materialschicht 2 kann aus den Materialien der nicht-metallischen Materialschicht 2 des Ausführungsbeispiels gemäß Figur 1a bestehen. Alternativ kann die nicht-metallische Materialschicht 2 aus Zement oder aus faserverstärktem Kunststoff, z. B. glasfaserverstärktem Kunststoff, bestehen. Als Basiskunststoff für den glasfaserverstärkten Kunststoff können duroplastische Kunststoffe, z. B. Polyesterharz oder Epoxidharz, oder thermoplastische Kunststoffe, z. B. Polyamid, verwendet werden.

Gemäß einer nicht dargestellten Ausführungsform ist das Sensorsystem 1 zur Bestimmung von Wanddicken WT der Materialschichten 2 einer Rohrleitungswand 3 ausgebildet, welche aus zwei nicht-metallischen Materialschichten 2 gebildet ist. Die zwei nicht-metallischen Materialschichten 2 können aus den zuvor, in Bezug auf Figuren 1a und 1b, beschriebenen Materialien bestehen. Insbesondere ist eine Außenschicht, d. h. die dem Sensorsystem 1 fernliegende Materialschicht 2, aus Zement gebildet, und eine Innenschicht, d. h. die dem Sensorsystem 1 nächstliegende Materialschicht 2, aus Polyurethan gebildet.

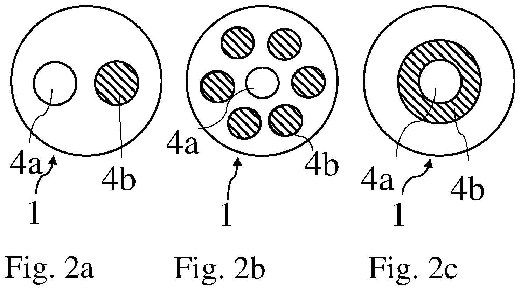

Die Transmittereinheit 4 der vorbeschriebenen und nachfolgend beschriebenen Ausführungsformen ist ein piezoelektrischer Breitbandtransmitter. Das Sensorsystem 1 kann gemäß einem der Ausführungsbeispiele der Figuren 2a bis 2c ausgestaltet sein. Die Figuren 2a bis 2c zeigen jeweils eine schematische Draufsicht auf eine Ultraschalleintritts-/Austrittsfläche eines Sensorsystems 1 gemäß möglichen Ausführungsformen. In diesen Ausführungsbeispielen sind Ultraschall emittierende und Ultraschall detektierende Transmittereinheiten 4a, 4b in einer Baueinheit integriert.

Gemäß der Ausführungsform nach Figur 2a weist das Sensorsystem 1 eine emittierende Transmittereinheit 4b und eine detektierende Transmittereinheit 4a auf.

Gemäß dem Ausführungsbeispiel der Figur 2b weist das Sensorsystem 1 mehrere Ultraschall emittierende Transmittereinheiten 4b und eine mittig zu den Ultraschall emittierenden Transmittereinheiten 4b angeordnete, Ultraschallechos detektierende Transmittereinheit 4a auf.

Gemäß einem Ausführungsbeispiel der Figur 2c weist das Sensorsystem 1 eine detektierende Transmittereinheit 4a auf und eine, die detektierende Transmittereinheit 4a ringförmig umschließende, emittierende Transmittereinheit 4b auf. In anderen Worten ist die zweite Transmittereinheit 4b durch einen an ihrer Ultraschallaustrittsfläche eingliedrigen Ring gebildet und innerhalb des Rings eine Ultraschalleintrittsfläche der ersten Transmittereinheit 4a angeordnet.

Alternativ oder zusätzlich sind die Sensorsysteme 1 nach dem Ausführungsbeispiel der Figur 2a oder 2c in einer Formation wie in Figur 2b dargestellt ist, mit ihren Ultraschallaustritts- bzw. Ultraschalleintrittsflächen zueinander (kreisförmig) angeordnet auf einem Außenumfang eines Inline-Inspektionsgeräts (ILI) installiert. Die Anzahl der in der Mitte angeordneten detektierenden Transmittereinheiten 4a und/oder der in dem Kreis angeordneten emittierenden Transmittereinheiten 4b ist nach Bedarf eines zu erreichenden Signal-Rausch-Verhältnisses, den Eigenschaften der Rohrleitung und einer Größe des Sensorsystems 1 anpassbar. Die emittierenden Transmittereinheiten 4b können auch in mehreren Kreisen unterschiedlicher Durchmesser um die detektierende(n) Transmittereinheit(en) 4a angeordnet sein. Alternativ zu den vorgenannten Ausführungsbeispielen sind die detektierenden Transmittereinheiten 4a in Kreisen um eine oder mehrere Ultraschall emittierende Transmittereinheit(en) 4b angeordnet. Dies kann sowohl in einer Baueinheit als auch in mehreren Baueinheiten nach den vorbeschriebenen Prinzipien realisiert sein.

Die Transmittereinheit(en) 4 wird/werden zum Betreiben eines Neigungsfang-Modus (engl. "pitch catch mode" oder PC-Modus) angesteuert. Der PC-Modus wird nachfolgend auch mit "PC" abgekürzt. Im Modus PC emittiert ein Teil der Transmittereinheit 4 (beispielsweise ein Teil, wie zuvor gemäß den Ausführungsformen gemäß Figuren 2a bis 2c beschrieben) Ultraschall in Richtung der Rohrleitungswand 3 und detektiert über einen anderen, baulich von dem Ultraschall emittierenden Teil getrennten Teil der Transmittereinheit 4 (beispielsweise ein Teil, wie zuvor gemäß den Ausführungsformen gemäß Figuren 2a bis 2c beschrieben), von der Rohrleitungswand 3 reflektierte Ultraschallechos.

Zur Bestimmung der Wanddicke WT1, WT2 einer Materialschicht 2 der Rohrleitungswand 3 kann beispielsweise folgendes, in Fig. 1c schematisch dargestelltes, Verfahren verwendet werden: Zunächst erfolgt gemäß Schritt "S100" ein Operieren der Transmittereinheit 4, um Ultraschall in Richtung der zu untersuchenden Materialschicht 2 zu emittieren und ein von der Materialschicht 2 reflektiertes Ultraschallecho zu detektieren. Die Transmittereinheit 4 wird operiert, um Ultraschall mit einer Wellenlänge λ zu emittieren, die folgender Bedingung genügt:

$$\lambda \gg |Dl - Dk|.$$

Hierbei ist *Dl* ein Akustikpfad eines Ultraschallstrahls, der aus einem der Rohrleitungswand 3 fernliegenden Abschnitt der Strahlenaustrittsfläche der Transmittereinheit 4 austritt, und *Dk* ist ein Akustikpfad eines Ultraschallstrahls, der aus einem der Rohrleitungswand 3 nächstliegenden Abschnitt der Strahlenaustrittsfläche der Transmittereinheit 4 austritt. Vorliegend fällt der Ultraschallstrahl mit dem Akustikpfad *Dl* schräg zu einer Flächennormalen N der Rohrleitungswand 3 ein. Bezüglich der Flächennormalen N wird auf die Figuren 1a und 1b verwiesen, in welchen eine Flächennormale N eingezeichnet ist. *Dk* ist ein Akustikpfad eines Ultraschallstrahls, der abweichend von der Flächennormalen N der zum Sensorsystem 1 nächstliegenden Oberfläche der Materialschicht 2 einfällt, d. h. auch schräg zu dieser. Die Akustikpfade der Ultraschallstrahlen können beispielsweise schräg verlaufen, wenn die Strahlenaustrittsfläche des Sensorsystems 1 zu der Rohrleitungswand 3 geneigt ist (nicht dargestellt).

Die Flächennormale N ist in den Figuren 1a und 1b für die erste Materialschicht 2 zur Illustration angedeutet. Es handelt sich stets um die Flächennormale N derjenigen Materialschicht 2, welche gerade auf ihre Wanddicke WT von dem Sensorsystem 1 untersucht wird. Ein Normalvektor entsprechend der Flächennormalen N zeigt dabei in die Richtung des Sensorsystems 1.

Gemäß einem Schritt "S200" erfolgt ein Operieren einer mit der zumindest einen Transmittereinheit 4 signaltechnisch verbundenen Steuereinheit 5, um eine Wanddicke WT der Materialschicht 2 anhand des Ultraschallechos zu bestimmen, welche beispielsweise die Wanddicke WT1 oder die Wanddicke WT2 sein kann.

Die Steuereinheit 5 erhält von der Transmittereinheit 4 ein Signal, dessen Stärke über die Zeit variiert. Zum Bestimmen der Wanddicke WT wählt die Steuereinheit 5 einen zeitlichen Signalausschnitt nach einem Innenwandecho der Materialschicht 2 und einer Harmonischen ersten Grades des Innenwandechos der Materialschicht 2. Auf diesen Signalausschnitt wendet die Steuereinheit 5 eine zweifache Fourier-Transformation an. Anschließend bestimmt die Steuereinheit 5 die Wanddicke WT anhand eines zeitlich am frühesten auftretenden Maximums einer Signalamplitude des Signalausschnitts.

Hierbei wird eine Wanddicke WT bestimmt anhand einer Periodendauer T1, T2, ..., Ti des Innenwandecho-Zeitpunkts. Die Wanddicke WT ergibt sich dann beispielsweise unter Berücksichtigung einer Periodendauer T1 der maximal großen Amplitude des Innenwandecho-Signals:

$$WT = \frac{CT1}{2}$$

Hierbei ist C die akustische Geschwindigkeit des Ultraschalls in der zu untersuchenden Materialschicht 2 der Rohrleitungswand 3.

Bezugszeichenliste

1      Sensorsystem
2      Materialschicht
3      Rohrleitungswand
4      Transmittereinheit

4a, 4b      emittierende/detektierende Transmittereinheit
5      Steuereinheit

C      Geschwindigkeit von Ultraschall in Materialschicht
N      Flächennormale
X      Längsachse der Rohrleitungswand

*Dl*      längerer Akustikpfad
*Dk*      kürzerer Akustikpfad
WT      Wanddicke
WT1      Wanddicke der dem Sensorsystem nächstliegenden Materialschicht
WT2      Wanddicke der dem Sensorsystem fernliegenden Materialschicht

S100      Operieren zumindest einer Transmittereinheit, um Ultraschall in Richtung einer Materialschicht zu emittieren und ein von der Materialschicht reflektiertes Ultraschallecho zu detektieren,
S200      Operieren einer mit der zumindest einen Transmittereinheit signaltechnisch verbundenen Steuereinheit, um eine Wanddicke der Materialschicht anhand des Ultraschallechos zu bestimmen

T1, Ti      Periodendauer

λ      (Lambda); Parameter für Wellenlänge

**Patentansprüche**

1. Verfahren zum Bestimmen einer Wanddicke (WT) einer Materialschicht (2) einer Rohrleitungswand (3), mittels eines akustischen Sensorsystems (1), bei Ausrichtungstoleranzen bis zu fünf Grad bezüglich einer Flächennormalen (N) an einem Punkt, auf den ein Ultraschallstrahl mit dem Bereich größter Intensität eines Strahlgürtels des Ultraschallstrahls gerichtet ist,
das Verfahren aufweisend:

     Operieren (S100) zumindest einer Transmittereinheit (4), um Ultraschall in Richtung der Materialschicht (2) zu emittieren und ein von der Materialschicht (2) reflektiertes Ultraschallecho zu detektieren,
     wobei die zumindest eine Transmittereinheit (4) Ultraschall mit einer Wellenlänge (λ) emittiert, die folgender Bedingung genügt:

$$\lambda \gg |Dl - Dk|,$$

     wobei *Dl* ein Akustikpfad eines Ultraschallstrahls ist, der aus einem der Rohrleitungswand (3) fernliegenden Abschnitt der Strahlenaustrittsfläche der Transmittereinheit (4) austritt,

und *Dk* ein Akustikpfad eines Ultraschallstrahls ist, der aus einem der Rohrleitungswand (3) nächstliegenden Abschnitt der Strahlenaustrittsfläche der Transmittereinheit (4) austritt; und Operieren (S200) einer mit der zumindest einen Transmittereinheit (4) signaltechnisch verbundenen Steuereinheit (5), um eine Wanddicke (WT) der Materialschicht (2) anhand des Ultraschallechos zu bestimmen.

2. Verfahren nach Anspruch 1, wobei die Rohrleitungswand (3) zumindest zwei Materialschichten (2) aufweist, wobei die zumindest eine Transmittereinheit (4) operiert wird, beim Emittieren von Ultraschall jede der Materialschichten (2) separat mit ihrer jeweiligen Resonanzfrequenz anzuregen.

3. Verfahren nach mindestens einem der vorgehenden Ansprüche 1 oder 2, wobei die zumindest eine Transmittereinheit (4) zum Aussenden und Detektieren von niederfrequentem Ultraschall ausgebildet ist, wobei eine Frequenz des Ultraschalls in einem Bereich von 100 kHz bis 1200 kHz liegt.

4. Verfahren nach mindestens einem der vorgehenden Ansprüche, wobei die Steuereinheit (5) folgendes Verfahren zur Auswertung eines Signals eines Ultraschallechos ausführt:

   - Auswählen eines zeitlichen Signalausschnitts nach einem Innenwandecho der Materialschicht (2) und einer Harmonischen ersten Grades des Innenwandechos der Materialschicht (2),
   - Anwenden einer zweifachen Fourier-Transformation auf den Signalausschnitt; und anschließend
   - Berechnen der Wanddicke (WT) anhand eines zeitlich am frühesten auftretenden Maximums einer Signalamplitude des Signalausschnitts.

5. Verfahren nach mindestens einem der vorgehenden Ansprüche, wobei das akustische Sensorsystem (1) aufweist:

   eine einzige Transmittereinheit (4), die konfiguriert ist, reflektierten Ultraschall zu detektieren, und
   mehrere, um die einzige Transmittereinheit (4) angeordnete, Transmittereinheiten (4), die jeweils konfiguriert sind, Ultraschall zu senden.

6. Verfahren nach mindestens einem der vorgehenden Ansprüche, wobei das akustische Sensorsystem (1) genau zwei Transmittereinheiten (4) aufweist, von denen

   die erste Transmittereinheit (4) konfiguriert ist, reflektierten Ultraschall zu detektieren, und

die zweite Transmittereinheit (4) konfiguriert ist, Ultraschall zu senden.

7. Verfahren nach dem vorgehenden Anspruch, wobei die zweite Transmittereinheit (4) durch einen an ihrer Ultraschallaustrittsfläche einstückigen Ring gebildet ist und, vorzugsweise konzentrisch, innerhalb des Rings eine Ultraschalleintrittsfläche der ersten Transmittereinheit (4) angeordnet ist.

8. Verfahren nach mindestens einem der vorgehenden Ansprüche, wobei das akustische Sensorsystem (1) eine Vielzahl von Transmittereinheiten (4) aufweist, wobei Ultraschallaustritts- und -eintrittsflächen der Transmittereinheiten (4) kreisförmig angeordnet sind.

9. Computerprogramm, umfassend Befehle, die bei der Ausführung des Computerprogramms durch einen Computer diesen veranlassen, ein Verfahren nach den vorgenannten Ansprüchen auszuführen.

10. Computerlesbares Medium, umfassend Befehle, die bei der Ausführung durch einen Computer diesen veranlassen, ein Verfahren nach den vorgenannten Ansprüchen 1 bis 8 auszuführen.

**Claims**

1. Method for determining a wall thickness (WT) of a material layer (2) of a pipeline wall (3) by means of an acoustic sensor system (1), with alignment tolerances of up to five degrees with respect to a surface normal (N) at a point to which an ultrasonic beam with the area of greatest intensity of a beam belt of the ultrasonic beam is directed,
the method comprising:

   operating (S100) at least one transmitter unit (4) in order to emit ultrasound toward the material layer (2) and to detect an ultrasound echo reflected from the material layer (2),
   wherein the at least one transmitter unit (4) emits ultrasound with a wavelength (λ) satisfying the following condition:

$$\lambda \gg |Dl - Dk|,$$

   where DI is an acoustic path of an ultrasonic beam emerging from a portion of the beam exit surface of the transmitter unit (4) remote from the pipeline wall (3),
   and Dk is an acoustic path of an ultrasonic beam emerging from a portion of the beam exit surface of the transmitter unit (4) closest to the pipeline wall (3); and

operating (S200) a control unit (5) signally connected to the at least one transmitter unit (4) in order to determine a wall thickness (WT) of the material layer (2) based on the ultrasonic echo.

2. Method according to claim 1, wherein the pipeline wall (3) comprises at least two material layers (2), wherein the at least one transmitter unit (4) is operated to excite each of the material layers (2) separately with its respective resonance frequency when emitting ultrasound.

3. Method according to at least one of the preceding claims 1 or 2, wherein the at least one transmitter unit (4) is designed for emitting and detecting low-frequency ultrasound, wherein a frequency of the ultrasound is in a range from 100 kHz to 1200 kHz.

4. Method according to at least one of the preceding claims, wherein the control unit (5) carries out the following method for evaluating a signal of an ultrasonic echo:

   selecting a temporal signal sequence after an inner wall echo of the material layer (2) and a first degree harmonic of the inner wall echo of the material layer (2),
   applying a two-fold Fourier transform to the signal sequence; and then
   calculating the wall thickness (WT) based on a temporally earliest occurring maximum of a signal amplitude of the signal sequence.

5. Method according to at least one of the preceding claims, wherein the acoustic sensor system (1) comprises:

   a single transmitter unit (4) configured to detect reflected ultrasound; and
   a plurality of transmitter units (4) arranged around the single transmitter unit (4), each configured to transmit ultrasound.

6. Method according to at least one of the preceding claims, wherein the acoustic sensor system (1) comprises exactly two transmitter units (4), of which

   the first transmitter unit (4) is configured to detect reflected ultrasound, and
   the second transmitter unit (4) is configured to transmit ultrasound.

7. Method according to the preceding claim, wherein the second transmitter unit (4) is formed by a one-piece ring at its ultrasound exit surface and an ultrasound entrance surface of the first transmitter unit (4) is arranged, preferably concentrically, inside the ring.

8. Method according to at least one of the preceding claims, wherein the acoustic sensor system (1) comprises a plurality of transmitter units (4), wherein ultrasound exit and entrance surfaces of the transmitter units (4) are arranged circularly.

9. Computer program comprising instructions which, when the computer program is executed by a computer, cause the computer to carry out a method according to any one of the preceding claims.

10. Computer-readable medium comprising instructions which, when executed by a computer, cause the computer to carry out a method according to the preceding claims 1 to 8.

**Revendications**

1. Procédé de détermination d'une épaisseur de paroi (WT) d'une couche de matériau (2) d'une paroi de canalisation (3) au moyen d'un système de détection acoustique (1), pour des tolérances d'orientations jusqu'à cinq degrés par rapport à une normale à la surface (N) à un point sur lequel est dirigé un rayonnement ultrasonore avec la plage de plus forte intensité d'une ceinture de rayonnement du rayonnement ultrasonore,
le procédé présentant :

   la mise en œuvre (S100) d'au moins une unité d'émission (4) afin d'émettre des ultrasons en direction de la couche de matériau (2) et de détecter un écho ultrasonore réfléchi par la couche de matériau (2),
   dans lequel l'au moins une unité d'émission (4) émet des ultrasons avec une longueur d'onde ($\lambda$) qui satisfait à la condition suivante :

$$\lambda >> |Dl - Dk|,$$

   dans lequel $Dl$ est un chemin acoustique d'un rayonnement ultrasonore qui sort d'un segment de la surface de sortie de rayonnement de l'unité d'émission (4) se situant éloigné de la paroi de canalisation (3),
   et $Dk$ est un chemin acoustique d'un rayonnement ultrasonore qui sort d'un segment de la surface de sortie de rayonnement de l'unité d'émission (4) se situant le plus près de la paroi de canalisation (3), et
   la mise en œuvre (S200) d'une unité de commande (5) reliée par signal avec l'au moins une unité d'émission (4) afin de déterminer une épaisseur de paroi (WT) de la couche de matériau (2) à l'aide de l'écho ultrasonore.

**2.** Procédé selon la revendication 1, dans lequel la paroi de canalisation (3) présente au moins deux couches de matériau (2), où l'au moins une unité d'émission (4) est mise en œuvre, lors de l'émission des ultrasons, pour stimuler chacune des couches de matériau (2) de manière séparée avec sa fréquence de résonance respective.

**3.** Procédé selon au moins une des revendications 1 ou 2 précédentes, dans lequel l'au moins une unité d'émission (4) est conçue pour l'émission et la détection d'ultrasons de faible fréquence, où une fréquence des ultrasons se situe dans la plage de 100 kHz à 1200 kHz.

**4.** Procédé selon au moins une des revendications précédentes, dans lequel l'unité de commande (5) exécute le procédé suivant pour l'exploitation d'un signal d'un écho ultrasonore :

- sélection d'un segment de signal dans le temps après un écho de paroi intérieur de la couche de matériau (2) et d'une harmonique de premier degré de l'écho de paroi intérieur de la couche de matériau (2),
- emploi d'une double transformation de Fourier sur le segment de signal ; et ensuite
- calcul de l'épaisseur de paroi (WT) à l'aide d'un maximum d'une amplitude de signal du segment de signal s'étend produit précédemment dans le temps.

**5.** Procédé selon au moins une des revendications précédentes, dans lequel le système de détection acoustique (1) présente :

une unité d'émission (4) unique qui est conçue pour détecter les ultrasons réfléchis, et plusieurs unités d'émission (4) disposées autour de l'unité d'émission (4) unique qui sont respectivement conçues pour émettre des ultrasons.

**6.** Procédé selon au moins une des revendications précédentes, dans lequel le système de détection acoustique (1) présente précisément deux unités d'émission (4), parmi lesquelles

la première unité d'émission (4) est conçue pour détecter les ultrasons réfléchis, et la seconde unité d'émission (4) est conçue pour envoyer des ultrasons.

**7.** Procédé selon la revendication précédente, dans lequel la seconde unité d'émission (4) est formée par un anneau en une seule pièce sur sa surface de sortie d'ultrasons et de préférence, une surface d'entrée d'ultrasons de la première unité d'émission (4) est disposée de manière concentrique à l'intérieur de l'anneau.

**8.** Procédé selon au moins une des revendications précédentes, dans lequel le système de détection acoustique (1) présente un grand nombre d'unités d'émission (4), où les surfaces de sortie et d'entrées d'ultrasons des unités d'émission (4) sont disposées en forme de cercle.

**9.** Programme informatique comprenant des ordres qui, lors de l'exécution du programme informatique par un ordinateur, font en sorte que celui-ci exécute un procédé selon les revendications précitées.

**10.** Support lisible par ordinateur, comprenant des ordres qui, lors de l'exécution par un ordinateur, font en sorte que celui-ci exécute un procédé selon les revendications 1 à 8 précitées.

EP 4 088 108 B1

Fig. 1a

Fig. 1b

Fig. 1c

EP 4 088 108 B1

Fig. 2a          Fig. 2b          Fig. 2c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2857834 A2

- WO 9210746 A1